(19) Europäisches Patentamt
European Patent Office
Office européen des brevets

(11) EP 0 690 067 B1

(12) **EUROPÄISCHE PATENTSCHRIFT**

(45) Veröffentlichungstag und Bekanntmachung des Hinweises auf die Patenterteilung:
**24.05.2000 Patentblatt 2000/21**

(51) Int Cl.[7]: **C07F 15/00**, B01J 31/22, C08L 83/05

(21) Anmeldenummer: **95109673.4**

(22) Anmeldetag: **22.06.1995**

(54) **Triazenoxid-Übergangsmetall-Komplexe als Hydrosilylierungskatalysatoren**

Triazeneoxide-transition-metal complexes as hydrosilylation catalysts

Complexes métalliques de transition de triazéneoxyde comme catalyseurs d'hydrosilylation

(84) Benannte Vertragsstaaten:
**AT BE DE FR GB IT NL**

(30) Priorität: **01.07.1994 DE 4423195**

(43) Veröffentlichungstag der Anmeldung:
**03.01.1996 Patentblatt 1996/01**

(73) Patentinhaber: **Wacker-Chemie GmbH**
**81737 München (DE)**

(72) Erfinder:
- **Dauth, Jochen, Dr.**
  **D-84489 Burghausen (DE)**
- **Wolferseder, Josef**
  **D-84367 Tann (DE)**
- **Deubzer, Bernward, Dr.**
  **D-84489 Burghausen (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**EP-A- 0 602 638** **EP-A- 0 636 642**

- **CHEMICAL ABSTRACTS, vol. 115, no. 6, 1991, Columbus, Ohio, US; abstract no. 63364k, & SYNTH. REACT. INORG. MET.-ORG. CHEM, Bd.21, Nr.3, 1991 Seiten 479 - 496 A. TANDON ET AL**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Hydrosilylierung in Gegenwart von Triazenoxid-Übergangsmetall-Komplexen, vernetzbare Organopolysiloxanzusammensetzungen, die Triazenoxid-Übergangsmetall-Komplexe enthalten, Triazenoxid-Platin-Komplexe und ein Verfahren zur Herstellung der Triazenoxid-Platin-Komplexe.

Triazenoxid-Übergangsmetall-Komplexe sind beispielsweise in R.L. Dutta, R. Sharma; J. Sci. Ind. Res., 40 (11) (1981) 715 und D.N Purohit et al.; Rev. Anal. Chem., 11(3-4), 269 (1992) beschrieben. Triazenoxid-Platin-Komplexe sind nicht beschrieben.

Es ist bekannt, daß die Anlagerung von Si-gebundenem Wasserstoff an eine aliphatische Mehrfachbindung, die üblicherweise als Hydrosilylierung bezeichnet wird, durch Katalysatoren, insbesondere Platinverbindungen, gefördert werden kann. Hierzu sei beispielsweise auf US-A 3,814,730 verwiesen. Diese Katalysatoren zeichnen sich durch eine niedrige Aktivierungsenergie aus und müssen in additionsvernetzenden Systemen oftmals inhibiert werden.

Es bestand die Aufgabe Katalysatoren bereitzustellen, die eine hohe Aktivierungsenergie besitzen, keine Inhibierung in additionsvernetzenden Systemen benötigen, aber nach Aktivierung die Anlagerung von Si-gebundenem Wasserstoff an eine aliphatische Mehrfachbindung fördern.

Die Erfindung betrifft ein Verfahren zur Umsetzung von Sigebundenen Wasserstoffatome aufweisenden Organosiliciumverbindungen mit aliphatischen Mehrfachbindungen aufweisenden organischen Verbindungen in Gegenwart von Triazenoxid-Übergangsmetall-Komplexen der allgemeinen Formel I

$$M(ANNNOR^1)_aX_b \qquad (I),$$

wobei

**M** Pt, Pd, Rh, Ru, Os oder Ir,

**$R^1$** einen einwertigen, gegebenenfalls substituierten Kohlenwasserstoffrest mit 1 bis 18 Kohlenstoffatomen je Rest, einen Rest der allgemeinen Formel $-SiR^2_c(OR^2)_{3-c}$ oder A,

**$R^2$** gleich oder verschieden ist und einen Alkylrest mit 1 bis 8 Kohlenstoffatomen je Rest,

**A** gleich oder verschieden sind, einen Rest der allgemeinen Formel

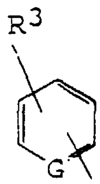 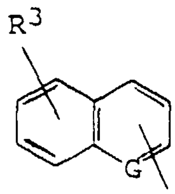 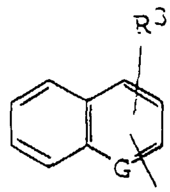 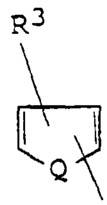 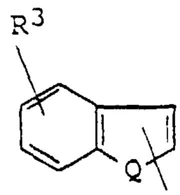

oder

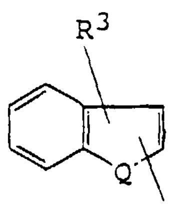

**G** CH oder N,

**Q** S, O oder NH,

**$R^3$** einen einwertigen gegebenenfalls substituierten Kohlenwasserstoffrest mit 1 bis 12 Kohlenstoffatomen je Rest oder einen Rest der Formel -F, -Cl, -Br, -I, -H, $-NH_2$, $-NR^2_2$, $-NO_2$, -OH, $-OR^2$, -SH, -CN, -COOH, -COCl, $-CONH_2$, $-COR^2$, -CHO, $-SO_2NHR^2$, $-SO_3H$, $-SO_2Cl$ oder $-R^4-SiR^2_c(OR^2)_{3-c}$,

**$R^4$** einen zweiwertigen Kohlenwasserstoffrest mit 1 bis 8 Kohlenstoffatomen je Rest,

**$R^2$** gleich oder verschieden ist und einen Alkylrest mit 1 bis 8 Kohlenstoffatomen je Rest,
**X** gleich oder verschieden ist und einen Liganden, ausgewählt aus der Gruppe von Cl, Br, I, $NH_3$, $P(C_2H_5)_3$, $P(C_6H_5)_3$, H, CO, 1,5-Cyclooctadien, Pyridin, Bipyridin, Acetat, Acetylacetonat, Phenylnitril, Ethylendiamin, Acetonitril, 2,5-Norbornadien, Nitrat, Nitrit, $H_2O$, Benzol, Diphenylphosphinoethan, 1,3-Divinyl-1,1,3,3-tetramethyldisiloxan, Ethylen und Diphenylacetylen,
**a** 1, 2, 3 oder 4,
**b** 0 oder eine ganze Zahl von 1 bis 6 und,
**c** 0, 1, 2 oder 3 bedeuten, bei dem die Triazenoxid-Übergangsmetall-Komplexe durch Erhitzen bei Temperaturen von 50°C bis 250°C und/oder durch Bestrahlen mit Licht aktiviert werden.

Beispiele für Reste **$R^1$** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexyl- und Cyclohexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest, Dodecylreste, wie der n-Dodecylrest; und Octadecylreste, wie der n-Octadecylrest; Cycloalkylreste, wie der Cyclohexylrest; Alkenylreste, wie der Vinyl-, 1-Propenyl-, 1-Butenyl-, 2-Butenyl-, Allyl-, Isobutenyl-, 1-Pentenyl- und 2-Methyl-1-butenylrest; Alkinylreste, wie der Ethinyl-, Propargyl-, 1-Propinyl- und 1-Butinylrest, und Aralkylreste, wie der Benzylrest und der α- und β-Phenylethylrest; wobei Alkylreste bevorzugt sind.

Beispiele für substituierte Kohlenwasserstoffreste **$R^1$** sind Halogenalkylreste, wie der 3,3,3-Trifluor-n-propylrest, der 2,2,2,2',2',2'-Hexafluorisopropylrest, der Heptafluorisopropylrest, der 3-Chlor-n-propylrest, 2-Ethylbromid und 3-Propylbromid; Hydroxyalkylreste, wie Reste der Formeln $HOCH_2CH_2OCH_2CH_2$-, $HOCH_2CH_2$- und $CH_3CH_2CH(OH)CH_2$-; Aminoalkylreste, wie der Aminomethyl- und Aminoethylrest; Carboxyalkylreste, wie Reste der Formeln $-(CH_2)_7COOH$, $-(CH_2)_8COOH$ und $-CH_2COCH_2CH_2COOH$ sowie deren Ester und Amide $-(CH_2)_7COOCH_3$, $-(CH_2)_7COOC_2H_5$, $-(CH_2)_7CONH_2$, $-(CH_2)_8COOCH_3$, $-(CH_2)_8COOC_2H_5$, $-(CH_2)_8CONH_2$, einen Rest der Formel $-CH(COOC_2H_5)_2$; und substituierte Aralkylreste, wie der substituierte Benzylrest und der substituierte α- und β-Phenylethylrest.

Beispiele für Reste **$R^2$** sind die für die Reste **$R^1$** angegebenen Beispiele für Alkylreste mit 1 bis 8 Kohlenstoffatomen je Rest.

Beispiele für Reste **$R^3$** sind die für die Reste **$R^1$** angegebenen Beispiele für substituierte und unsubstituierte Kohlenwasserstoffreste mit 1 bis 12 Kohlenstoffatomen je Rest.

Beispiele für Kohlenwasserstoffreste **$R^4$** sind lineare oder verzweigte Alkylenreste, wie der Methylen-, Ethylen-, Propylen-, 2-Methylpropylen- und Butylenrest.

Die Reste **$R^3$** sind Substituenten des Aromaten- und Heteroaromatenrestes A und können sich beispielsweise, wenn A ein aromatischer Sechsring, wie Phenylrest ist, in ortho-, meta- oder para-Stellung befinden.

Beispiele für Katalysatoren sind solche der Formeln
$PtANNNOR^1{}_aX_b$, mit a = 2 oder 4 und b = 2, 1 oder 0,
$PdANNNOR^1{}_aX_b$, mit a = 1 oder 2 und b = O oder 1,
$RuANNNOR^1{}_aX_b$, mit a = 1, 2, 3 oder 4 und b = 0, 1, 2 oder 3,
$RhANNNOR^1{}_aX_b$, mit a = 1, 2 oder 3 und b = 0, 1 oder 2,
$OsANNNOR^1{}_aX_b$, mit a = 3 oder 4 und b = 0, 1, 2 oder 3,
$IrANNNOR^1{}_aX_b$, mit a = 1, 2, 3 oder 4 und b = 0, 1, 2 oder 3,
wobei X, A und $R^1$ die oben dafür angegebene Bedeutung haben.

Bevorzugte Beispiele für
Triazenoxid-Übergangsmetall-Komplexe sind solche der Formeln $Pt[C_6H_5NNNOCH_3]_4$, $Pt[p\text{-}CN\text{-}C_6H_4NNNOC_6H_{11}]_4$, $Pt[p\text{-}H_3CO\text{-}C_6H_4NNNOC_6H_{11}]_4$, $Pt[p\text{-}CH_3(CH_2)_x\text{-}C_6H_4NNNOCH_3]_4$, 1,5-Cyclooctadien·$Pt[p\text{-}CN\text{-}C_6H_4NNNOC_6H_{11}]_2$, 1,5-Cyclooctadien·$Pt[p\text{-}CH_3O\text{-}C_6H_4NNNOCH_3]_2$, $[(C_6H_5)_3]P_3Rh[p\text{-}CN\text{-}C_6H_4NNNOC_6H_{11}$ und $Pd[p\text{-}CH_3\ (CH_2)_x\text{-}C_6H_4NNNOCH_3]_2$,
wobei x 1, 3, 5, 7, 11 und 17, insbesondere 1, 5, 7 und 11 ist, und die oben genannten Triazenido-Komplexe des Platins besonders bevorzugt sind.

Bei den Triazenoxid-Übergangsmetall-Komplexen als Katalysatoren hängt die Aktivierungstemperatur vom Triazenoxid-Liganden der allgemeinen Formel $ANNNOR^1$ und dem Übergangsmetallatom M des jeweiligen Komplexes ab. Als Licht, mit dem die erfindungsgemäßen Katalysatoren aktiviert werden können, ist Ultraviolettlicht bevorzugt. Im Handel gibt es eine Vielzahl von Lampen, die Ultraviolettlicht im Bereich von 200 bis 400 nm aussenden. Die Aktivierung der erfindungsgemäßen Katalysatoren kann durch Erhitzen bei Temperaturen von 50°C bis 250°C und zusätzlich durch Bestrahlen mit Licht, bevorzugt Ultraviolettlicht, erfolgen.

Unter organischen Verbindungen mit aliphatischen Mehrfachbindungen sind auch organische Verbindungen mit cycloaliphatischen Mehrfachbindungen zu verstehen.

Die Triazenoxid-Platin-Komplexe der allgemeinen Formel I können in allen vernetzbaren Organopolysiloxanzusammensetzungen verwendet werden, in denen auch bisher Katalysatoren verwendet werden konnten, die die Anlagerung von Si-gebundenem Wasserstoff an aliphatische Mehrfachbindung fördern.

Gegenstand der Erfindung sind daher auch vernetzbare Organopolysiloxanzusammensetzungen enthaltend

(1) Organopolysiloxane, die Reste mit aliphatischen Kohlenstoff-Kohlenstoff-Mehrfachbindungen aufweisen,
(2) Organopolysiloxane mit Si-gebundenen Wasserstoffatomen oder anstelle von Organopolysiloxanen (1) und (2)
(3) Organopolysiloxane, die Reste mit aliphatischen Kohlenstoff-Kohlenstoff-Mehrfachbindungen und Si-gebundene Wasserstoffatome aufweisen, und
(4) Triazenoxid-Übergangsmetall-Komplexe der allgemeinen Formel I als Katalysatoren.

Unter Resten mit aliphatischen Kohlenstoff-Kohlenstoff-Mehrfachbindungen sind auch Reste mit cycloaliphatischen Kohlenstoff-Kohlenstoff-Mehrfachbindungen zu verstehen.

Als Organopolysiloxane (1), die Reste mit aliphatischen Kohlenstoff-Kohlenstoff-Mehrfachbindungen aufweisen, werden vorzugsweise lineare oder verzweigte Organopolysiloxane aus Einheiten der allgemeinen Formel II

$$R^5_nR^6_mSiO_{\frac{4-n-m}{2}} \qquad \text{(II)},$$

wobei

**$R^5$** einen einwertigen, gegebenenfalls substituierten von aliphatischen Kohlenstoff-Kohlenstoff-Mehrfachbindungen freien Kohlenwasserstoffrest mit 1 bis 18 Kohlenstoffatomen je Rest und
**$R^6$** einen einwertigen Kohlenwasserstoffrest mit aliphatischer Kohlenstoff-Kohlenstoff-Mehrfachbindung mit 2 bis 8 Kohlenstoffatomen je Rest bedeutet,
**n** 0, 1, 2 oder 3,
**m** 0, 1 oder 2

und die Summe **n+m** 0, 1, 2 oder 3 ist,
mit der Maßgabe, daß durchschnittlich mindestens 2 Reste **$R^6$** je Molekül vorliegen, verwendet.

Die Organopolysiloxane (1) besitzen vorzugsweise eine durchschnittliche Viskosität von 100 bis 10 000 mPa·s bei 25°C.

Beispiele für Kohlenwasserstoffreste **$R^5$** sind die für **$R^1$** aufgeführten Beispiele für einwertige, gegebenenfalls substituierte, von aliphatischen Kohlenstoff-Kohlenstoff-Mehrfachbindungen freie Kohlenwasserstoffreste mit 1 bis 18 Kohlenstoffatomen je Rest.

Beispiele für Reste **$R^6$** sind Alkenylreste, wie der Vinyl-, 5-Hexenyl-, 1-Propenyl-, Allyl-, 1-Butenyl- und 1-Pentenylrest; rest; und Alkinylreste, wie der Ethinyl-, Propargyl- und 1-Propinylrest.

Als Organopolysiloxane (2), die Si-gebundene Wasserstoffatome aufweisen, werden vorzugsweise lineare, cyclische oder verzweigte Organopolysiloxane aus Einheiten der allgemeinen Formel III

$$R^5_eH_fSiO_{\frac{4-e-f}{2}} \qquad \text{(III)},$$

wobei

$R^5$ die bei der allgemeinen Formel II angegebene Bedeutung hat,
e 0, 1, 2 oder 3,
f 0, 1 oder 2

und die Summe von **e+f** 0; 1, 2 oder 3 ist,
mit der Maßgabe, daß durchschnittlich mindestens 2 Si-gebundene Wasserstoffatome je Molekül vorliegen, verwendet.

Die Organopolysiloxane (2) besitzen vorzugsweise eine durchschnittliche Viskosität von 10 bis 1 000 mPa·s bei 25°C.

Als Organopolysiloxane (3), die aliphatische Kohlenstoff-Kohlenstoff-Mehrfachbindungen und Si-gebundene Wasserstoffatome aufweisen und anstelle von Organopolysiloxanen (1) und (2) verwendet werden können, werden vorzugsweise solche aus Einheiten der allgemeinen Formeln IV, V und VI

$$R^5_k SiO_{\frac{4-k}{2}},\quad R^5_1 R^6 SiO_{\frac{3-1}{2}} \text{ und } \quad R^5_p HSiO_{\frac{3-p}{2}} \qquad \text{(IV, V, VI)},$$

wobei

| | |
|---|---|
| **$R^5$** und **$R^6$** | die bei der allgemeinen Formel II angegebenen Bedeutungen aufweisen, |
| **k** | 0, 1, 2 oder 3, |
| **l** | 0, 1 oder 2, |
| **p** | 0, 1 oder 2, ist |

mit der Maßgabe, daß je Molekül durchschnittlich mindestens 2 Reste **$R^6$** und durchschnittlich mindestens 2 Si-gebundene Wasserstoffatome vorliegen, verwendet.

Beispiele für Organopolysiloxane (3) sind solche aus $SiO_{4/2}$-, $R^5_3SiO_{1/2}$-, $R^5_2R^6SiO_{1/2}$- und $R^5_2HSiO_{1/2}$- Einheiten, sogenannte MQ-Harze, wobei diese Harze T-Einheiten ($R^5SiO_{3/2}$) und D-Einheiten ($R^5_2SiO$) enthalten können.

Die Organopolysiloxane (3) besitzen vorzugsweise eine durchschnittliche Viskosität von 100 bis 100 000 mPa·s bei 25°C bzw. sind Feststoffe mit Molekulargewichten von 5 000 bis 50 000 g/mol.

Die Triazenoxid-Übergangsmetall-Komplexe der allgemeinen Formel I werden vorzugsweise in Mengen von 1 bis 1 000 Gew.- ppm (Gewichtsteilen je Million Gewichtsteilen), bevorzugt 10 bis 100 Gew.-ppm, jeweils berechnet als elementares Übergangsmetall Pt, Pd, Ru, Rh, Os oder Ir und bezogen auf das Gesamtgewicht der Organopolysiloxane (1) und (2) bzw. auf das Gesamtgewicht der Organopolysiloxane (3), eingesetzt.

Bei den vernetzbaren Organopolysiloxanzusammensetzungen können Inhibitoren mitverwendet werden. Beispiele für Inhibitoren sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25°C bei 1012 mbar (abs.) und mindestens einer aliphatischen Dreifachbindung, wie 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, Inhibitoren aus einer Mischung aus Diallylmaleinat und Vinylacetat, und Maleinsäuremonoester.

Beispiele für Si-gebundene Wasserstoffatome aufweisende Organosiliciumverbindungen sind Silane mit einem Si-gebundenen Wasserstoffatom je Molekül, wie Trichlorsilan, Dimethylchlorsilan, Dimethylethoxysilan, Methyldiethoxysilan, Methyldichlorsilan und Triethoxysilan, und Organopolysiloxane mit mindestens einem Si-gebundenen Wasserstoffatom je Molekül, wie $\alpha,\omega$-Dihydrogen[dimethylpolysiloxan], Tetramethyldisiloxan, Tetramethylcyclotetrasiloxan, Mischpolymerisate aus Trimethylsiloxan- und Methylhydrogensiloxaneinheiten, Mischpolymerisate aus Trimethylsiloxan-, Dimethylsiloxan- und Methylhydrogensiloxaneinheiten und Trimethylsiloxyhydrogensilan.

Beispiele für aliphatische Mehrfachbindungen aufweisende organische Verbindungen sind Verbindungen mit aliphatischer Kohlenstoff-Kohlenstoff-Doppelbindung, wie Styrol, Allylglycidether, Allylcyanid, Allylacetat, Allylbernsteinsäureanhydrid, Glycolmonoallylether, Allylmethacrylat, Allylamin und Cyclohexen und Verbindungen mit aliphatischer Kohlenstoff-Kohlenstoff-Dreifachbindung, wie Acetylen und Butinol.

Die Erfindung betrifft auch Triazenoxid-Platin-Komplexe der allgemeinen Formel VII

$$Pt(ANNNOR^1)_aX_b \qquad \text{(VII)},$$

wobei **A, $R^1$, X, $_a$** und **b** die für die allgemeine Formel I angegebenen Bedeutungen aufweisen.

Die Herstellung von Triazenoxid-Komplexen von Übergangsmetallen - mit Ausnahme der Triazenoxid-Komplexe von Platin -, und die Herstellung der Triazenhydroxide sind beispielsweise in R.L. Dutta, R. Sharma; J. Sci. Ind. Res., 40(11) (1981) 715 beschrieben.

Die Erfindung betrifft weiterhin ein Verfahren zur Herstellung der Triazenoxid-Platin-Komplexe der allgemeinen Formel VII, bei dem Triazenhydroxide der allgemeinen Formel VIII

$$ANNNOHR^1 \qquad \text{(VIII)},$$

in Gegenwart von Basen mit Platinverbindungen der allgemeinen Formel IX

$$PtX_d \qquad \text{(IX)},$$

umgesetzt werden,
wobei **A**, $\mathbf{R^1}$ und **X** die für die allgemeine Formel I angegebenen Bedeutungen aufweisen und

**d** eine ganze Zahl von 1 bis 6 bedeutet.

Bevorzugte Beispiele für im Verfahren zur Herstellung der Triazenoxid-Platin-Komplexe einsetzbare Triazenhydroxid-Liganden der allgemeinen Formel $ANNNOHR^1$ sind solche der Formeln $C_6H_5NNNOHCH_3$, $C_6H_5NNNOHC_6H_5$, p-$CH_3O$-$C_6H_4NNNOHCH_3$, o-$CH_3O$-$C_6H_4NNNOHCH_3$, p-CN-$C_6H_4NNNOH(CH_2)_xCH_3$, p-$NO_2$-$C_6H_4NNNOHC_6H_{11}$, p-$(CH_3)_2N$-$C_6H_4NNNOH(CH_2)_xCH_3$, und insbesondere p-CN-$C_6H_4NNNOHC_6H_{11}$, p-Cl-$C_6H_4NNNOHC_6H_{11}$, und p-$CH_3(CH_2)_xC_6H_4NNNOHCH_3$, wobei x 1, 3, 5, 7, 11 und 17, insbesondere 1, 5, 7 und 11 ist.

Beispiele für Platinverbindungen der Formel $PtX_d$, die bei Herstellung der Triazenoxid-Platin-Komplexe eingesetzt werden, sind $PtCl_2$, $PtJ_2$, $[(C_6H_5)_3P]_2PtCl_2$, $[(C_2H_5)_3P]_2PtCl_2$, $PtCl_4$, $Pt(H_2NCH_2CH_2NH_2)Cl_2$, $Pt(NH_3)_2Cl_2$, $PtBr_2$, $PtJ_2$, $H_2PtCl_6$, 1,5-Cyclooctadien·$PtCl_2$, (1,5-Cyclooctadien)$_2$Pt, 1,3-Divinyl-1,1,3,3-tetramethyldisiloxanplatinkomplex (z.B. $Pt_2$[1,3-divinyl-1,1,3,3-tetramethyldisiloxan]3), Bis(diphenylacetylen)Pt, wobei $PtCl_4$, 1,5-Cyclooctadien·$PtCl_2$, $PtJ_2$ und 1,3-Divinyl-1,1,3,3-tetramethyldisiloxanplatinkomplex bevorzugt sind.

Beispiele für Basen, die bei Herstellung der Triazenoxid-Platin-Komplexe eingesetzt werden, sind n-Butyllithium, Triethylamin, Piperidin, Pyridin, $NaOCH_3$ und $NaNH_2$, wobei n-Butyllithium und Triethylamin bevorzugt sind.

Das Verfahren zur Herstellung der Triazenoxid-Platin-Komplexe wird vorzugsweise in Gegenwart von organischen Lösungsmitteln, wie n-Hexan, Toluol, Methylenchlorid, Chloroform, Aceton oder Tetrahydrofuran durchgeführt, kann aber auch in Gegenwart eines Gemisches aus Wasser und organischem Lösungsmittel, wie Methanol, Ethanol, Isopropanol oder Tetrahydrofuran durchgeführt werden.

Das Verfahren zur Herstellung der Triazenoxid-Platin-Komplexe wird vorzugsweise bei Temperaturen von 0°C bis 50°C, beim Druck der umgebenden Atmosphäre und unter Lichtausschluß durchgeführt. Das organische Lösungsmittel bzw. das Gemisch aus organischem Lösungsmittel und Wasser wird vorzugsweise nach der Umsetzung entfernt.

In den nachfolgenden Beispielen sind, falls jeweils nicht anders angegeben,

a) alle Mengenangaben auf das Gewicht bezogen;

b) alle Drücke 0,10 MPa (abs.);

c) alle Temperaturen 20° C .

## Beispiele

Alle Arbeiten bis einschließlich Beispiel 6 werden unter absolutem Lichtausschluß durchgeführt.

**Allgemeine Synthese der in Beispiel 1 bis 6 eingesetzten Triazenhydroxide:**
0.1 mol eines Anilinderivates werden in 300 ml 10 %iger wäßriger Salzsäure gelöst und auf 0°C abgekühlt.

Unter Rühren werden langsam 0.1 mol Natriumnitrit, gelöst in 40 ml Wasser, zugegeben. Anschließend wird eine Stunde bei 0°C gerührt, mit 20 g Aktivkohle versetzt, weitere zehn Minuten bei 0°C gerührt und dann filtriert.

Das Filtrat wird sodann in eine bei 0°C gerührte Vorlage aus 0.1 mol eines Hydroxylaminderivates und 0.6 mol Natriumcarbonat, gelöst in 600 ml Wasser, langsam zugetropft. Die korrespondierenden Triazenhydroxide präzipitieren aus der wäßrigen Lösung, werden abfiltriert und sorgfältig mit Wasser gewaschen.

Die gelben Triazenhydroxide werden bei Raumtemperatur über Phosphorpentoxid im Hochvakuum bis zur Gewichtskonstanz getrocknet.

Die Ausbeuten liegen zwischen 50 und 80 Prozent der Theorie.

Tabelle 1:

| Anilinderivat | Hydroxylaminderivat | Triazenhydroxid | Beispiel |
|---|---|---|---|
| 4-NC-$C_6H_4$-$NH_2$ | H-$NC_6H_{11}$(OH)·HCl | 4-NC-$C_6H_4$-$N_3C_6H_{11}$(OH) | 1 |
| $C_6H_5$-$NH_2$ | H-$NCH_3$(OH)·HCl | $C_6H_5N_3CH_3$(OH) | 2+5 |
| 4-$CH_3(CH_2)_3$-$C_6H_4$-$NH_2$ | H-$NCH_3$(OH)·HCl | 4-$CH_3(CH_2)_3C_6H_4N_3CH_3$(OH) | 4+6 |
| 4-$CH_3O$-$C_6H_4$-$NH_2$ | H-$NCH_3$(OH)·HCl | 4-$CH_3O$-$C_6H_4N_3CH_3$(OH) | 3 |

Alle nachstehenden Beispiele wurden unter Feuchtigkeitsausschluß durchgeführt.

**Beispiele 1 bis 6: Herstellung der Triazenoxid-Übergangsmetall-Komplexe**

Beispiel 1:

0.7 g (2.9 mmol) 1-[4-Cyanophenyl]-3-cyclohexyl-3-hydroxytriaz-1-en werden in 20 g (434.1 mmol) Ethanol gelöst.

Anschließend wird die Lösung mit 0.6 g (3.2 mmol) einer 30 %igen methanolischen Kaliumhydroxidlösung versetzt und eine halbe Stunde bei Raumtemperatur gerührt. Danach werden 0.54 g (1.4 mmol) Cycloocta-1.4-dien-Platindichlorid, in 10 g (217.1 mmol) Ethanol suspendiert, langsam zugegeben und zwei Stunden gerührt, wobei ein hellbeiger Feststoff ausfällt. Der Feststoff wird isoliert, mit 10 g Ethanol gewaschen und in 30 g (325.6 mmol) Toluol gelöst. Die Lösung wird filtriert und das Lösungsmittel bei Raumtemperatur im Hochvakuum evaporiert. Als Rückstand erhält man 0.8 g eines gelben Feststoffs mit einem Platingehalt von 28 Gew.% (Ausbeute: 82 % d. Th.; bezogen auf reines Platin).

0.3 g (0.43 mmol Platin) des Bis[1-(4-cyanophenyl)-3-cyclohexyl-3-oxytriaz-1-en]platin- cycloocta-1,4-dienkomplexes werden in 8.1 g (87.9 mmol) Toluol gelöst. Die Lösung enthält 1 Gew.% reines Platin und wird als Kat.1 bezeichnet.

Beispiel 2:

2 g (13.2 mmol) 1-Phenyl-3-methyl-3-hydroxy-triaz-1-en werden in 7 g (97.1 mmol) Tetrahydrofuran gelöst. Nachdem die Lösung auf 0°C abgekühlt worden ist, werden unter Rühren 10 ml (16 mmol Butyllithium) einer 1,6 molaren Butyllithiumlösung in n-Hexan langsam zugetropft, wobei die Temperatur 5°C nicht übersteigen darf. Das Reaktionsgemisch wird noch eine halbe Stunde gerührt. Anschließend wird eine Lösung aus 1.11 g (3.3 mmol) Platintetrachlorid in 15 g (208.0 mmol) Tetrahydrofuran langsam unter Rühren bei 0°C zugegeben und die Reaktionslösung eine Stunde gerührt. Nach der Filtration wird das Lösungsmittel im Hochvakuum bei Raumtemperatur evaporiert und der Rückstand in 50 g (1.563 mol) Methanol aufgenommen. Aus der methanolischen Lösung präzipitiert ein Feststoff, der durch Filtration isoliert wird. Das dunkelgelbe Pulver wird bei Raumtemperatur im Hochvakuum bis zur Gewichtskonstanz getrocknet. Man erhält 0.84 g Produkt mit einem Platingehalt von 33.8 Gew.% (Ausbeute: 44.1 % d. Th., bezogen auf reines Platin).

0.3 g (0.52 mmol Platin) des Tetrakis[1-phenyl-3-methyl-3-oxy-triaz-1-en]platinkomplexes werden in 9.84 g (136.5 mmol) Tetrahydrofuran gelöst. Die Lösung enthält 1 Gew.% reines Platin und wird als Kat.2 bezeichnet.

Beispiel 3:

3 g (16.6 mmol) 1-(4-Methoxyphenyl)-3-methyl-3-hydroxy-triaz-1-en werden in 10 g (138.7 mmol) Tetrahydrofuran gelöst. Nachdem die Lösung auf 0°C abgekühlt worden ist, werden unter Rühren 12.5 ml (20.0 mmol Butyllithium) einer 1.6 molaren Butyllithiumlösung in n-Hexan zugetropft, wobei die Temperatur 5°C nicht übersteigen darf. Das Reaktionsgemisch wird noch eine halbe Stunde gerührt. Anschließend wird eine Lösung aus 1.4 g (4.15 mmol) Platintetrachlorid in 17 g (235.8 mmol) Tetrahydrofuran langsam unter Rühren bei 0°C zugegeben und die Reaktionslösung eine Stunde gerührt. Nach der Filtration wird das Lösungsmittel im Hochvakuum bei Raumtemperatur evaporiert und der Rückstand in 50 g (499.2 mmol) Isobutylmethylketon aufgenommen. Aus der Lösung präzipitiert ein Feststoff, der durch Filtration isoliert wird. Er wird zweimal mit je 20 g (625 mmol) Methanol gewaschen und dann im Hochvakuum bei Raumtemperatur bis zur Gewichtskonstanz getrocknet. Man erhält 1.45 g eines braunen Pulvers mit einem Platingehalt von 30.4 Gew.% (Ausbeute: 54.4 % d. Th., bezogen auf reines Platin).

0.3 g (0.47 mmol Platin) des Tetrakis[1-(4-methoxy- phenyl)-3-methyl-3-oxy-triaz-1-en]platinkomplexes werden in 8.82 g (122.3 mmol) Tetrahydrofuran gelöst. Die Lösung enthält 1 Gew.% reines Platin und wird als Kat.3 bezeichnet.

Beispiel 4:

3 g (14.5 mmol) 1-(4-Butylphenyl)-3-methyl-3-hydroxy-triaz-1-en werden in 10 g (138.7 mmol) Tetrahydrofuran gelöst. Nachdem die Lösung auf 0°C abgekühlt worden ist, werden unter Rühren 10.9 ml (17.4 mmol Butyllithium) einer 1.6 molaren Butyllithiumlösung in n-Hexan langsam zugetropft, wobei die Temperatur 5°C nicht übersteigen darf. Das Reaktionsgemisch wird noch eine halbe Stunde gerührt. Anschließend wird eine Lösung aus 1.22 g (3.6 mmol) Platintetrachlorid in 15 g (208.0 mmol) Tetrahydrofuran unter Rühren langsam zugegeben und die Reaktionslösung eine Stunde gerührt. Nach der Filtration wird das Lösungsmittel im Hochvakuum bei Raumtemperatur evaporiert und der Rückstand in 50 g (1.563 mol) Methanol aufgenommen. Aus der methanolischen Lösung präzipitiert ein Feststoff,

der durch Filtration isoliert wird. Dieser wird bei Raumtemperatur im Hochvakuum bis zur Gewichtskonstanz getrocknet. Man erhält 0.72 g eines gelben Feststoffes mit einem Platingehalt von 30.8 Gew.% (Ausbeute: 31.6% d. Th., bezogen auf reines Platin).

0.3 g (0.47 mmol Platin) des Tetrakis[1-(4-butylphenyl)-3-methyl-3-oxy-triaz-1-en]platin-komplexes werden in 8.94 g (97.0 mmol) Toluol gelöst. Die Lösung enthält 1 Gew.% reines Platin und wird als Kat.4 bezeichnet.

Beispiel 5:

0.2 g (1.3 mmol) 1-Phenyl-3-methyl-3-hydroxy-triaz-1-en werden in 2 g (27.7 mmol) Tetrahydrofuran gelöst. Nachdem die Lösung auf 0°C abgekühlt worden ist, werden unter Rühren 1.0 ml (1.6 mmol Butyllithium) einer 1.6 molaren Butyllithiumlösung in n-Hexan langsam zugetropft, wobei die Temperatur 5°C nicht übersteigen darf. Das Reaktionsgemisch wird noch eine halbe Stunde gerührt.

Anschließend wird eine Lösung aus 1.2 g (1.3 mmol) Tris(triphenylphosphin)rhodiumchlorid in 10 g (138.7 mmol) Tetrahydrofuran langsam unter Rühren bei 0°C zugegeben und die Reaktionslösung eine Stunde gerührt. Nach der Filtration wird das Lösungsmittel im Hochvakuum bei Raumtemperatur evaporiert und der Rückstand in 50 g (1.22 mol) Acetonitril aufgenommen. Aus der Lösung präzipitiert ein Feststoff, der durch Filtration isoliert wird. Dieser wird im Hochvakuum bei Raumtemperatur bis zur Gewichtskonstanz getrocknet. Man erhält 0.31 g eines hellbraunen Pulvers (Ausbeute: 22.9 % d. Th.).

0.1 g (0.096 mmol Rhodium) des (1-Phenyl-3-methyl-3-oxy-triaz-1-en)-tris(triphenylphosphin)-rhodium-komplexes werden in 0.89 g (7.5 mmol) Chloroform gelöst. Die Lösung enthält 1 Gew.% reines Rhodium und wird als Kat. 5 bezeichnet.

Beispiel 6:

0.8 g (4.5 mmol) Palladiumdichlorid werden bei 50°C in 50 g 5 %iger wäßriger Salzsäure (68.6 mmol Chlorwasserstoff) gelöst. Anschließend wird mit 5.5 g (67.0 mmol) Natriumacetat ein pH-Wert von ca. 3 eingestellt. Anschließend wird bei 60°C unter Rühren eine Lösung aus 1.87 g (9.0 mmol) 1-(4-Butylphenyl)-3-methyl-3-hydroxy-triaz-1-en in 250 g (5.43 mol) Ethanol zugegeben. Bereits zu Beginn der Zugabe fällt ein Feststoff aus, dessen Menge bei fortschreitender Zugabe der ethanolischen Lösung zunimmt. Danach wird noch eine Stunde bei 60°C gerührt, der Feststoff durch Filtration isoliert und in 70 g (0.76 mol) Toluol aufgenommen. Nach der Filtration wird das Lösungsmittel bei Raumtemperatur im Hochvakuum evaporiert und das violette Pulver bis zur Gewichtskonstanz getrocknet. Man erhält 2.1 g Produkt mit einem Palladiumgehalt von 17.8 Gew.% (Ausbeute: 78.1 % d. Th., bezogen auf reines Palladium).

0.3 g (0.5 mmol reines Palladium) des Bis[1-(4-butylphenyl)-3-methyl-3-oxy-triaz-1-en]palladiumkomplexes werden in 5.04 g (54.7 mmol) Toluol gelöst. Die Lösung enthält 1 Gew.% reines Palladium und wird als Kat.6 bezeichnet.

Beispiel 7:

0.083 g Kat.1, dessen Herstellung in Beispiel 1 beschrieben ist, werden zu 8 g α,ω-Divinyldimethylpolysiloxan mit einer Viskosität von 500 mPa·s bei 25°C gegeben. Zur Reaktionsmischung werden 0.2 g eines Mischpolymerisats aus Trimethylsiloxan- und Methylhydrogensiloxaneinheiten mit einer Viskosität von 33 mPa·s bei 25°C, das 1.12 Gew. % Sigebundenen Wasserstoff enthält, gegeben, so daß die Mischung 100 Gew.-ppm Platin, berechnet als Element, enthält.

Nach 4,5 Minuten Erwärmen bei 50°C kann eine vollständige Vernetzung erreicht werden. Man erhält ein transparentes, in organischen Lösungsmitteln unlösliches Produkt.

Beispiel 8:

Die Arbeitsweise von Beispiel 7 wird wiederholt mit der Abänderung, daß 0.083 g Kat.4, dessen Herstellung in Beispiel 4 beschrieben ist, anstelle von 0.083 g Kat.1 eingesetzt wird. Nach 2,2 Min. bei 120°C kann eine vollständige Vernetzung erreicht werden. Man erhält ein transparentes, in organischen Lösungsmitteln unlösliches Produkt.

Beispiel 9:

Die Arbeitsweise von Beispiel 7 wird wiederholt mit der Abänderung, daß ein α,ω-Divinyldimethylpolysiloxan mit einer Viskosität von 1000 mPa·s bei 25°C anstelle von 500 mPa·s bei 25°C und 0.083 g Kat.2, dessen Herstellung in Beispiel 2 beschrieben ist, anstelle von 0.083 g Kat.1 eingesetzt wird.

Nach 2 Minuten bei 120°C kann eine vollständige Vernetzung erreicht werden. Man erhält ein transparentes, in organischen Lösungsmitteln unlösliches Produkt.

Beispiel 10:

In 0.75 g eines Organopolysiloxanharzes aus SiO2-, Trimethylsiloxan-, Dimethylvinylsiloxan- und Methylphenylsiloxaneinheiten mit einer Viskosität von 1600 mPa·s bei 25°C, das 7.6 Gew.% Si-gebundene Vinylgruppen enthält, werden 0.083 g Kat.1, dessen Herstellung in Beispiel 1 beschrieben ist, gemischt. Dazu werden 7.45 g eines Organopolysiloxanharzes aus $SiO_2$-, Trimethylsiloxan-, Dimethylhydrogensiloxan- und Methylphenylsiloxaneinheiten mit einer Viskosität von 2000 mPa·s bei 25°C, das 0.2 Gew.% Si-gebundenen Wasserstoff enthält, gegeben, so daß die Mischung 100 Gew.-ppm Platin enthält.

Nach 20 Minuten Bestrahlen mit Ultraviolettlicht (UVA = 70 mW/$cm^2$, UVB = 20 mW/$cm^2$) wird eine komplette Vernetzung der Masse erzielt. Es wird ein hellgelbes, transparentes, in organischen Lösungsmitteln unlösliches Produkt erhalten.

Beispiel 11:

Die Arbeitsweise von Beispiel 8 wird wiederholt mit der Abänderung, daß 0.083 g Kat.3, dessen Herstellung in Beispiel 3 beschrieben ist, anstelle von 0.083 g Kat.4 eingesetzt wird.

Nach 3 Minuten Bestrahlen mit Ultraviolettlicht (UVA = 70 mW/$cm^2$, UVB = 20 mW/$cm^2$) wird eine komplette Vernetzung der Masse erzielt. Man erhält ein transparentes, in organischen Lösungsmitteln unlösliches Produkt.

Beispiel 12:

0.083 g Kat.1, dessen Herstellung in Beispiel 1 beschrieben ist, werden zu 7.88 g α,ω-Divinyldimethylpolysiloxan mit einer Viskosität von 500 mPa·s bei 25°C gegeben. Zur Reaktionsmischung werden 0.2 g eines Mischpolymerisats aus Trimethylsiloxan- und Methylhydrogensiloxaneinheiten mit einer Viskosität von 33 mPa·s bei 25°C, das 1.12 Gew.-% Sigebundenen Wasserstoff enthält, und 0.116 g (0.93 mmol) 1-Ethinylcyclohexanol gegeben, so daß die Mischung 100 Gew.-ppm Platin, berechnet als Element, enthält.

Nach 15 Sekunden Bestrahlen mit Ultraviolettlicht (UVA = 70 mW/$cm^2$, UVB = 20 mW/$cm^2$) wird eine komplette Vernetzung der Masse erzielt. Man erhält ein transparentes, in organischen Lösungsmitteln unlösliches Produkt.

Beispiel 13:

Die Arbeitsweise von Beispiel 7 wird wiederholt mit der Abänderung, daß 0.083 g Kat.5, dessen Herstellung in Beispiel 5 beschrieben ist, anstelle von 0.083 g Kat.1 eingesetzt wird. Nach 10 Minuten Bestrahlung mit Ultraviolettlicht (UVA = 70 mW/$cm^2$, UVB = 20 mW/$cm^2$) wird eine komplette Vernetzung der Masse erzielt. Man erhält ein transparentes, in organischen Lösungsmitteln unlösliches Produkt.

Beispiel 14:

Die Arbeitsweise von Beispiel 10 wird wiederholt mit der Abänderung, daß 0.083 g Kat.6, dessen Herstellung in Beispiel 6 beschrieben ist, anstelle von 0.083 g Kat.1 eingesetzt wird. Nach 30 Minuten bei 170°C wird eine komplette Vernetzung der Masse erzielt. Es wird ein hellgelbes, transparentes, in organischen Lösungsmitteln unlösliches Produkt erhalten.

## Patentansprüche

1. Verfahren zur Umsetzung von Si-gebundene Wasserstoffatome aufweisenden Organosiliciumverbindungen mit aliphatische Mehrfachbindungen aufweisenden organischen Verbindungen in Gegenwart von Triazenoxid-Übergangsmetall-Komplexen der allgemeinen Formel I

$$M(ANNNOR^1)_aX_b \quad (I),$$

wobei

**M** Pt, Pd, Rh, Ru, Os oder Ir,
**$R^1$** einen einwertigen, gegebenenfalls substituierten Kohlenwasserstoffrest mit 1 bis 18 Kohlenstoffatomen je

Rest, einen Rest der allgemeinen Formel $SiR^2_c(OR^2)_{3-c}$ oder A,

**$R^2$** gleich oder verschieden ist und einen Alkylrest mit 1 bis 8 Kohlenstoffatomen je Rest,

**A** gleich oder verschieden sind, einen Rest der allgemeinen Formel

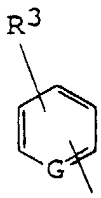
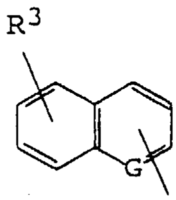
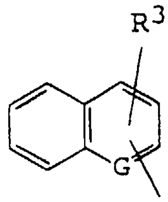
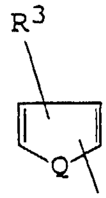
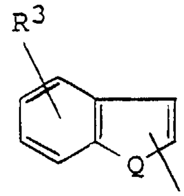

oder

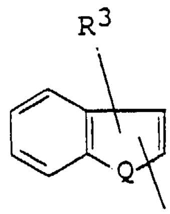

**G** CH oder N,

**Q** S, O oder NH,

**$R^3$** einen einwertigen gegebenenfalls substituierten Kohlenwasserstoffrest mit 1 bis 12 Kohlenstoffatomen je Rest oder einen Rest der Formel -F, -Cl, -Br, -I, -H, $-NH_2$, $-NR^2_2$, $-NO_2$, -OH, $-OR^2$, -SH, -CN, -COOH, -COCl, $-CONH_2$, $-COR^2$, -CHO, $-SO_2NHR^2$, $-SO_3H$, $-SO_2Cl$ oder $-R^4-SiR^2_c(OR^2)_{3-c}$,

**$R^4$** einen zweiwertigen Kohlenwasserstoffrest mit 1 bis 8 Kohlenstoffatomen je Rest,

**X** gleich oder verschieden ist und einen Liganden, ausgewählt aus der Gruppe von Cl, Br, I, $NH_3$, $P(C_2H_5)_3$, $P(C_6H_5)_3$, H, CO, 1,5-Cyclooctadien, Pyridin, Bipyridin, Acetat, Acetylacetonat, Phenylnitril, Ethylendiamin, Acetonitril, 2,5-Norbornadien, Nitrat, Nitrit, $H_2O$, Benzol, Diphenylphosphinoethan, 1,3-Divinyl-1,1,3,3-tetramethyldisiloxan, Ethylen und Diphenylacetylen,

**a** 1, 2, 3 oder 4,

**b** 0 oder eine ganze Zahl von 1 bis 6 und,

**c** 0, 1, 2 oder 3 bedeuten,

bei dem die Triazenoxid-Übergangsmetall-Komplexe durch Erhitzen bei Temperaturen von 50°C bis 250°C und/ oder durch Bestrahlen mit Licht aktiviert werden.

**2.** Vernetzbare Organopolysiloxanzusammensetzungen enthaltend

(1) Organopolysiloxane, die Reste mit aliphatischen Kohlenstoff-Kohlenstoff-Mehrfachbindungen aufweisen,
(2) Organopolysiloxane mit Si-gebundenen Wasserstoffatomen oder anstelle von Organopolysiloxanen (1) und (2)
(3) Organopolysiloxane, die Reste mit aliphatischen Kohlenstoff-Kohlenstoff-Mehrfachbindungen und Si-gebundene Wasserstoffatome aufweisen, und
(4) Triazenoxid-Übergangsmetall-Komplexe der allgemeinen Formel I als Katalysatoren.

**3.** Triazenoxid-Platin-Komplexe der allgemeinen Formel VII

$$Pt(ANNNOR^1)_aX_b \qquad (VII),$$

wobei **A, $R^1$, X, $_a$** und **b** die für die allgemeine Formel I angegebenen Bedeutungen aufweisen.

**4.** Verfahren zur Herstellung der Triazenoxid-Platin-Komplexe der allgemeinen Formel VII, dadurch gekennzeichnet, daß Triazenhydroxide der allgemeinen Formel VIII

$$ANNNOHR^1 \qquad (VIII),$$

in Gegenwart von Basen mit Platinverbindungen der allgemeinen Formel IX

$$PtX_d \qquad (IX),$$

umgesetzt werden,
wobei **A, $R^1$** und **X** die für die allgemeine Formel I angegebenen Bedeutungen aufweisen und

**d** eine ganze Zahl von 1 bis 6 bedeutet.

## Claims

**1.** Process for reacting organosilicon compounds having Si-bonded hydrogen atoms with organic compounds having aliphatic multiple bonds in the presence of triazene oxide - transition metal complexes of the general formula I

$$M(ANNNOR^1)_aX_b \qquad (I)$$

where

M is Pt, Pd, Rh, Ru, Os or Ir,
$R^1$ is a monovalent, unsubstituted or substituted hydrocarbon radical having from 1 to 18 carbon atoms per radical, a radical of the general formula $-SiR(OR^2)_{3-c}$ or A,
$R^2$ is identical or different on each appearance and is an alkyl radical having from 1 to 8 carbon atoms per radical,
A is identical or different on each appearance and is a radical of the general formula

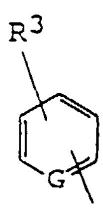 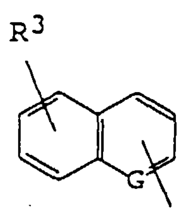 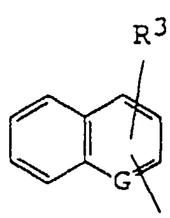 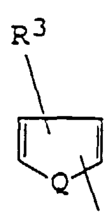 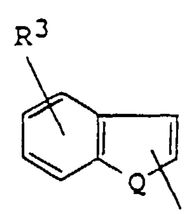

or

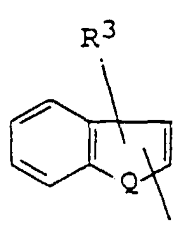

G is CH or N,
Q is S, O or NH,
$R^3$ is a monovalent, unsubstituted or substituted hydrocarbon radical having from 1 to 12 carbon atoms per radical or is a radical of the formula -F, -Cl, -Br, -I, -H, $-NH_2$ -NR, $-NO_2$, -OH, $-OR^2$, -SH, -CN, -COOH, -COCl, $-CONH_2$, $-COR^2$, -CHO, $-SO_2NHR^2$, $-SO_3H$, $-SO_2Cl$ or $-R^4-SiR(OR^2)_{3-c}$,
$R^4$ is a divalent hydrocarbon radical having from 1 to 8 carbon atoms per radical,
X is identical or different on each appearance and is a ligand selected from the group consisting of Cl, Br, I, $NH_3$, $P(C_2H_5)_3$, $P(C_6H_5)_3$, H, CO, 1,5-cyclooctadiene, pyridine, bipyridine, acetate, acetylacetonate, phenylnitrile, ethylenediamine, acetonitrile, 2,5-norbornadiene, nitrate, nitrite, $H_2O$, benzene, diphenylphosphinoethane, 1,3-divinyl-1,1,3,3-tetramethyldisiloxane, ethylene and diphenylacetylene,
a is 1, 2, 3 or 4,
b is 0 or an integer from 1 to 6 and
c is 0, 1, 2 or 3,

wherein the triazene oxide - transition metal complexes are activated by heating at temperatures of from 50°C to 250°C and/or by irradiation with light.

**2.** Crosslinkable organopolysiloxane compositions comprising

(1) organopolysiloxanes which have radicals containing aliphatic carbon-carbon multiple bonds,
(2) organopolysiloxanes having Si-bonded hydrogen atoms, or in place of organopolysiloxanes (1) and (2)
(3) organopolysiloxanes which have radicals containing aliphatic carbon-carbon multiple bonds and Si-bonded hydrogen atoms, and
(4) triazene oxide - transition metal complexes of the general formula I as catalysts.

**3.** Triazene oxide - platinum complexes of the general formula VII

$$Pt(ANNNOR^1)_aX_b \qquad (VII),$$

where A, $R^1$, X, a and b are as defined for the general formula I.

**4.** Process for preparing the triazene oxide - platinum complexes of the general formula VII, characterized in that triazene hydroxides of the general formula VIII

$$ANNNOHR^1 \qquad (VIII),$$

are reacted in the presence of bases with platinum compounds of the general formula IX

$$PtX_d \qquad (IX),$$

where A, $R^1$ and X are as defined for the general formula I and

d is an integer from 1 to 6.

## Revendications

**1.** Procédé de réaction de composés organosiliciés renfermant des atomes d'hydrogène liés au silicium avec des composés organiques renfermant des liaisons multiples aliphatiques en présence de complexes d'oxyde de triazène/métal de transition de formule générale I

$$M(ANNNOR^1)_aX_b \qquad (I),$$

dans laquelle

M représente Pt, Pd, Rh, Ru, Os ou Ir,
$R^1$ représente un radical hydrocarboné monovalent éventuellement substitué ayant de 1 à 18 atomes de carbone par radical, un radical de formule générale $-SiR^2_c(OR^2)_{3-c}$ ou A,
$R^2$ est identique ou différent et représente un radical alkyle ayant de 1 à 8 atomes de carbone par radical,
A est identique ou différent et représente un radical de formule générale

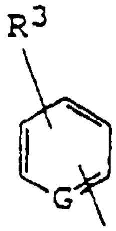
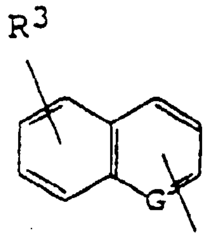
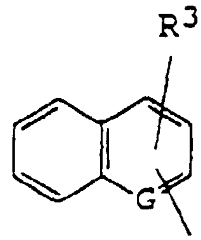
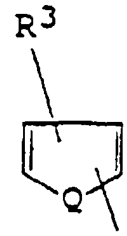
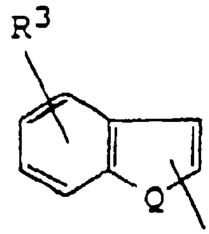

ou

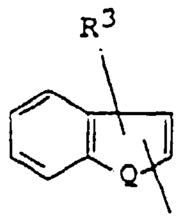

G représente CH ou N,
Q représente S, O ou NH,
$R^3$ représente un radical hydrocarboné monovalent éventuellement substitué ayant de 1 à 12 atomes de carbone par radical ou un radical de formule -F, -Cl, -Br, -I, -H, $-NH_2$, $-NR^2_2$, $-NO_2$, -OH, $-OR^2$, -SH, -CN, -COOH, -COCl, $-CONH_2$, $-COR^2$, -CHO, $-SO_2NHR^2$, $-SO_3H$, $-SO_2Cl$ ou $-R^4SiR^2_c(OR^2)_{3-c}$,
$R^4$ représente un radical hydrocarboné bivalent ayant de 1 à 8 atomes de carbone par radical,
X est identique ou différent et représente un ligand choisi parmi le groupe constitué de Cl, Br, I, $NH_3$, $P(C_2H_5)_3$, $P(C_6H_5)_3$, H, CO, du 1,5-cyclo-octadiène, de la pyridine, de la bipyridine, de l'acétate, de l'acétylacétonate, du phénylnitrile, de l'éthylènediamine, de l'acétonitrile, du 2,5-norbornadiène, du nitrate, du nitrite, $H_2O$, du benzène, du diphénylphosphinoéthane, du 1,3-divinyl-1,1,3,3-tétraméthyldisiloxane, de l'éthylène et du diphénylacétylène,
a vaut 1, 2, 3 ou 4,
b vaut 0 ou représente un entier de 1 à 6, et
c vaut 0, 1, 2 ou 3,
dans lequel les complexes d'oxyde de triazène/métal de transition sont activés par chauffage à des températures de 50°C à 250°C et/ou par irradiation avec de la lumière.

**2.** Compositions d'organopolysiloxanes réticulables contenant

(1) des organopolysiloxanes renfermant des radicaux ayant des liaisons multiples carbone-carbone aliphatiques,
(2) des organopolysiloxanes ayant des atomes d'hydrogène liés au silicium ou, à la place des organopolysiloxanes (1) et (2)
(3) des organopolysiloxanes renfermant des radicaux ayant des liaisons multiples carbone-carbone aliphatiques et des atomes d'hydrogène liés au silicium, et
(4) des complexes d'oxyde de triazène/métal de transition de formule générale I en tant que catalyseurs.

**3.** Complexes d'oxyde de triazène/platine de formule générale VII

$$Pt(ANNNOR^1)_aX_b \qquad (VII),$$

dans laquelle A, $R^1$, X, a et b ont les significations indiquées pour la formule générale I.

4. Procédé de préparation des complexes d'oxyde de triazène/platine de formule générale VII, caractérisé en ce que l'on fait réagir des hydroxydes de triazène de formule générale VIII

$$ANNNOHR^1 \qquad (VIII),$$

en présence de bases avec des composés du platine de formule générale IX

$$PtX_d \qquad (IX),$$

dans lesquelles A, $R^1$ et X ont les significations indiquées pour la formule générale I et

d représente un entier de 1 à 6.